# EUROPEAN PATENT APPLICATION

(11) **EP 1 087 275 A1**
(43) Date of publication of application: **28.03.2001**
(21) Application number: 99203082.5
(22) Date of filing: 21.09.1999
(51) Int. Cl.: G05B 19/042

(54) **Computerised system for industrial control system design**

(71) Applicant: ABB Research Ltd., 8050 Zürich (CH)
(72) Inventor: Ceiner, Guido, 20141 Milano (IT); Cataldo, Andrea, 20093 Cologno Monzese (MI) (IT); Danieli, Massimo, 37138 Verona (IT)
(74) Representative: Giavarini, Francesco

(57) **Abstract**

The present invention relates to a computerised system for designing a control system for an industrial process and/or plant which comprises an integrated computerised environment, aimed to support the design of said control system through the construction of graphical representations. Said integrated computerised environment comprises:
- first operating means for constructing a first graphical representation aimed to support the functional design of said control system:
- second operating means for constructing a second graphical representation aimed to support the programming of said control system;
said second and first means being integrated through the use of compatible graphical formalisms.

## Description

The present invention relates to a computerised system, for performing the design of an industrial control system related an industrial process and/or plant.

More particularly the present invention relates to a computerised system, which allows performing in an integrated manner both the functional design and the programming of an industrial control system.

Computerised systems, for designing industrial process and/or plant controls, are well known in the state of the art. Generally, conventional computerised systems comprise one or more computerised environments where merely the programming of said control systems (e.g. the programming of the included controllers) is performed. This fact entails that, during the design activity, the user must keep into consideration both the functional aspects, related to the operation of the process and/or plant to control, and the programming aspects strictly related to the particular HW/SW control platform adopted. The design activity entails, in any case, a considerable effort because, very often, a complicated working flow is needed in order to perform both the functional and the programming requirements. In fact, for example, many operations comprising the manual editing of data are often needed in order to provide information from an environment to another.

Moreover, conventional computerised systems do not provide automatically the functional documentation, independent from the used control platform related to the designed control strategies.

Where this kind of functional documentation is requested, conventional CAD tools are to be used. Then, the functional documentation is "translated" by the programmer into the language (for example a block language following the standard IEC 1131) specific of the adopted control platform.

Obviously this procedure increases the time and costs for completing the design of the control system. Furthermore, many mistakes or misunderstandings can easily arise.

In order to avoid these drawbacks, methods for performing automatically both the functional design and the programming of the control systems, have been recently introduced. These methods provide, first of all, in a computerised environment the functional design phase. For example, one of the graphical representations, provided by the international standards (such as SAMA or DIN/VGB), is commonly used. Then, in another separate computerised environment, the programming of the control system is carried out. An automatic code generator translates the graphical representations of the functional design into the programming language (e.g. a graphical block language) specific of a predefined control platform. Even these computerised systems represent an important improvement in the state of the art, some drawbacks can be still identified. Due to the separation between the functional design and the programming environments, the presence of a code generator appears necessary. Unfortunately the complexity of the description of the control system in a programming language is much more higher with respect of the functional description.

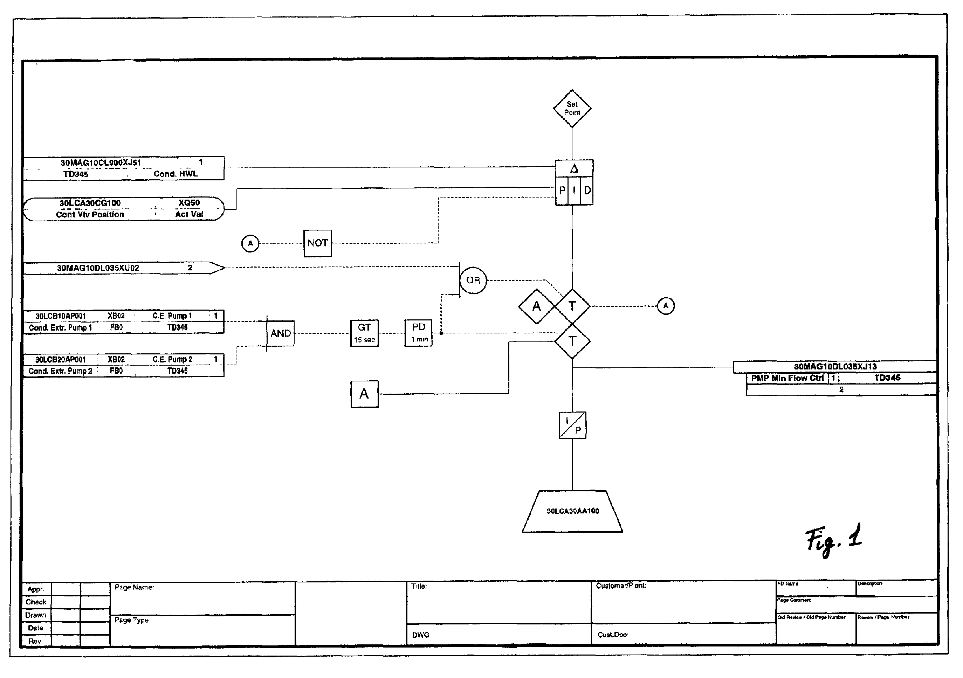

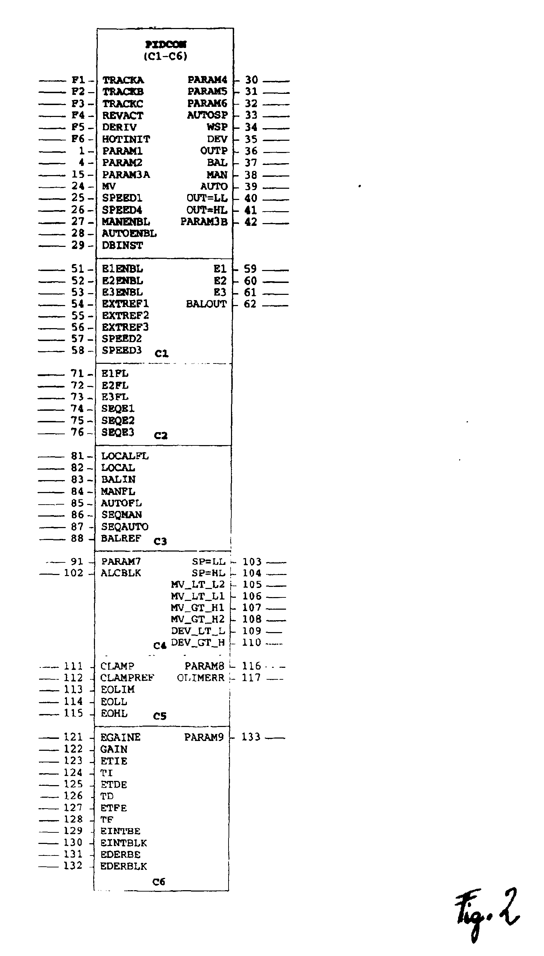

This fact appears quite evident if we refer to figures 1 and 2. In figure 1, it is represented an example of a control regulator described using a SAMA graphical formalism. In figure 2, it is represented the same control regulator which is represented, using a specific programming language. For example, the different number of input/output pins, which can be easily noticed, gives an indication of the different levels of complexity. This fact happens because the programming phase requires much more information for being accomplished.

Furthermore, still from figures 1 and 2, it is possible to notice that different formalisms are used. These formalisms are not compatible: this means that the programming environment cannot access directly to the information represented in the functional environment.

The different level of complexity and the use of non-compatible formalisms make almost impossible to execute a good translation from an environment to another. Very often, it is necessary to provide additional information to the programming description. Obviously this is accomplished by manual editing. This fact represents a very important drawback, which is not limited to a simple lost of time in the design process. In fact, it makes difficult also to perform the re-design procedures that are often needed during the placement of the control system, in order to ensure their correct operation. Obviously, due to the presence of manual work, it is impossible to ensure the propagation of these variations also "back" into the functional design environment. The updating of the functional design of the control system is then performed manually by the operator at the end of the design process. Obviously this fact represents a further relevant disadvantage. Another drawback, which is also typical of the conventional computerised systems described above, is still present also in the more recent computerised system of the state of the art. This drawback is constituted by the largely different nature of the documentation produced by the functional design and by the programming phases. Obviously this fact is due to the usage of non-compatible formalisms, which makes difficult also the interpretation of the same portion of process and/or plant.

So, the exchange of information during the design process flow becomes difficult and mistakes and misunderstandings can easily arise.

Main aim of the present invention is to provide a computerised system for designing a control system for an industrial process and/or plant, which allows integrating the functional design and the programming phases of said control system.

Within this scope, another object of the present invention it is to provide a computerised system, which allows easily switching from the functional design to the programming phase and vice-versa.

Another object of the present invention is to provide a computerised system, which allows avoiding the need of code generators for translating information from the functional phase to the other and vice-versa.

Another object of the present invention is to provide a computerised system, which allows releasing documentation consistent for both the functional design and the programming phases of said control systems.

Thus the present invention provides a computerised system, for designing a control system for an industrial process and/or plant, comprising a computerised environment for supporting the design of said control system through the construction of graphical representations, said computerised environment comprising:
- first operating means for constructing a first graphical representation aimed to support a functional design of said control system;
- second operating means for constructing a second graphical representation aimed to support the programming of said control system;
said first and second operating means being integrated through the usage of compatible graphical formalisms.

The present invention will now be described referring to the following figures wherein:
figure 1 represents a control regulator described using the SAMA design formalism.
figure 2 represents the same control regulator as figure 1 described using a specific programming language formalism.
figure 3 represents a preferred embodiment of the structure of the computerised system according to the present invention.

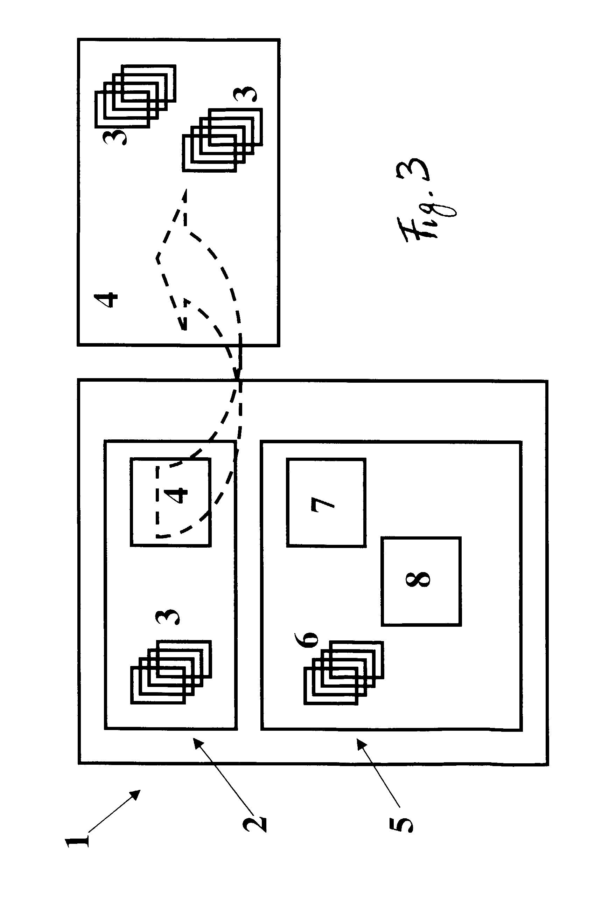

Referring now to figure 3, the computerised system according to the present invention comprises an computerised environment 1 aimed to support the design of a control system through the construction of graphical representations. For example, the environment 1 can be constituted by a computerised engineering platform, such that used for a distributed control system (for example an ADVANT platform). The environment 1 comprises first operating means 2 for constructing a first graphical representation, aimed to support a functional design of said strategies. The operating means 2 can be represented by one or more SW tools, which make possible to construct a first graphical representation of the control strategies to be designed. Said first graphical representation 2 adopts preferably predefined formalisms, preferably similar to those provided by the international standards.

So blocks or other diagrams can represent for example portions of process and/or plant such as, for example, valves, controllers and the like.

However in said first environment a different formalism can also be configured.

As mentioned above, the first operating means 2 are aimed to represent the control system strategies from a functional point of view. This means that only the aspects, related to the operations of the process and/or of the plant to control, are taken into account. From this point of view, the operating means 2 can help to perform a "minimal" level of the design of the control system. In a preferred embodiment the first operating means 2 comprises one or more first graphical structures 3 aimed to support the functional design of an elementary portion of said control strategies. Moreover one or more of the graphical structures 3 can be mapped using one or more second graphical structures 4. Graphical structures 3 and 4 represent an advantageous solution for building effectively a functional representation of the control strategies. Obviously said graphical structures 3 and 4 can follow one of the known international standards.

The environment 1 comprises also second operating means 5 for constructing a second graphical representation, aimed to support the programming of the control strategies to be designed. As well as for operating means 1, the operating means 2 can be represented by one or more computerised tools, wherein it is possible to program the desired control strategies.

The peculiarity of the invention consists in the fact that the second operating means 5 are integrated with the first operating means 2 through the use graphical formalisms that are compatible. These facts mean that all the information used by the operating means 2 is available and can be directly used by said second operating means. The use of compatible formalisms can be obtained adopting graphical symbols having the same semantic nature are used for both the first and the second operating means.

Obviously, due to fact that the programming phase requires more information, second operating means adopt an extended graphical symbol alphabet with respect to that used by the first operating means. The use of compatible formalisms is obtained configuring the first and the second operating means, which can preferably be thought as software computer programs, in a similar manner. This means that, on both said first and second operating means, the same elaboration mechanisms and rules, for processing and for representing information, are implemented.

Thanks to the formalism compatibility, it is possible to switch easily from the first functional graphical representation, performed by the operating means 2, to the second graphical representation, used for the programming of the control strategies and vice-versa. The switch happens internally to the same computerised environment 1 and can be easily performed using predefined HW/SW keys or toolbars or the like. In practice the user can view and work on both the functional and the programming representations of the control strategies to be designed. The compatibility of the formalisms is quite advantageous because it allows eliminating completely the need of any language translation or interpretation during the switch between the first and second operating means and vice-versa. Moreover this solution allows releasing consistent documentation for both the functional design and the programming of the control strategies. Also the re-design of the control strategies can be easily implemented. If any change is performed in the programming during the installation, it can be reported quickly also on the functional design with the same kind of formalism.

In a preferred embodiment, the second operating means 5 comprise one or more third graphical structures 6 aimed to support the programming of an elementary portion of said control strategies. The graphical structures 6 can be mapped using one or more fourth graphical structures 7 aimed to perform the mapping of said third graphical structures. Moreover, in a further preferred embodiment, second operating means 5 can comprise one or more fifth graphical structures 8, aimed to support the implementation of the software code executed by each elementary portions of said strategies. In practice, each of the graphical structures 8 comprise the set of instructions (using for example a block language like those provided by the IEC 1131 standard) for the programming of each portion of the process and/or plant control system.

The computerised system, according to the present invention, thus conceived is susceptible of numerous modifications and variations, all of which are within the scope of the inventive concept; all the details may furthermore be replaced with other technically equivalent elements.

## Claims

1. A computerised system for designing a control system for an industrial process and/or plant comprising an integrated computerised environment for supporting the design of said control system through the construction of graphical representations, said integrated computerised environment comprising:
- first operating means for constructing a first graphical representation aimed to support the functional design of said control system;
- second operating means for constructing a second graphical representation aimed to support the programming of said control system;
said second and first means being integrated through the use of compatible graphical formalisms.

2. A computerised system according to claim 1, wherein said first operating means comprise one or more first graphical structures aimed to support the functional design of an elementary portion of said control system.

3. A computerised system according to claim 2, wherein said first operating means comprise one or more first graphical structures aimed to perform a mapping of one or more of said first graphical structures.

4. A computerised system according to one or more of the previous claims, wherein said second operating means comprise one or more third graphical structures aimed to support the programming of an elementary portion of said control system.

5. A computerised system according to claim 4, wherein said second operating means comprise one or more fourth graphical structures aimed to perform a mapping of said third graphical structures.

6. A computerised system according to one or more of the previous claims, wherein said second operating means comprise one or more fifth graphical structures aimed to support the implementation of software code executed by each elementary portions of said control system.
